# EUROPEAN PATENT APPLICATION

(11) **EP 0 844 331 A1**
(43) Date of publication of application: **27.05.1998**
(21) Application number: 97850155.9
(22) Date of filing: 07.11.1997
(51) Int. Cl.: E01B 35/00, E02D 1/02

(54) **Power transmission device for a drill for obtaining soil samples**

(30) Priority: 25.11.1996 SE 9604318
(71) Applicant: Söderberg, Folke, 711 91 Lindesberg (SE); Alasaukko-Oja, Osmo, 711 25 Gusselby (SE)
(72) Inventor: Söderberg, Folke, 711 91 Lindesberg (SE); Alasaukko-Oja, Osmo, 711 25 Gusselby (SE)
(74) Representative: Mrazek, Werner

(57) **Abstract**

A power transmission device for allowing a bore unit included in an equipment for obtaining soil samples, especially from embankments, to perform a slight wobbling movement during the boring operation in order to thereby reduce the loads that arises when the drill hits stones and other hard object. For this purpose the drill is provided with an articulated universal joint (6) between the motor and the drill cylinder (7), in combination with that the lower portion of the drill cylinder is allowed to move laterally.

## Description

### TECHNICAL FIELD OF THE INVENTION

The present invention relates to a power transmission device for soil boring machines for obtaining ground samples, and more specifically samples from embankments.

### PRIOR ART

Devices that utilize rotating tubular drills for obtaining ground samples from railway embankments are previously known. EP-O-096431 discloses one or more assemblies arranged on a railway car, each including one or two tubular drills that can be inclined a selected angle with regard to the embankment and be bored into this. The material, mainly ballast and soil, thus introduced into each drill, respectively, constitutes a bore core that follows with the drill and can be examined through an aperture in the side of the cylindrical tube.

In the conventional assembly the drill is rotated, through a power transmission device and a driving shaft, by a motor. The power transmission device is designed to be able to transmit forces that rotate the drill, as well as axial forces for raising and sinking the drill. The preferred power transmission device of the patent mentioned above does further allow for a quick replacement of the drill. In conventional boring units are also used a plain bearing provided in the lower part of the unit, intended to guide the drill when it is urged into the embankment and to take radial loads from the drill.

An attachment of the conventional type has disadvantages. During the boring operation the drill is exposed to irregular loads from the ballast when it hits a large piece of stone in an adverse manner. Due to the load introduced at the top, the drill is forced to crush the stone or, alternatively, the boring unit is to some extent deformed. In both cases, the boring unit is subject to axial as well as radial loads. Therefore, the slide bearing mentioned above has been viewed as necessary in order to avoid that the resulting loads will be transmitted to the driving motor and cause harm thereto, or to any other part of the assembly.

Therefore, within the conventional power transmission the loads will be distributed between the bearing of the lower part and, via the power transmission device, the driving shaft and driving motor, respectively.

Thus, the slide bearing in combination with the conventional power transmission does not reduce the loads during boring, but does merely redistribute them. Depending on the overall stiffness of the assembly, the forces of reaction cause wear on the parts included or damage to the drilled material. In the latter case this may have the effect that the obtained drill core is not representative for the investigated part of the embankment.

### SUMMARY OF THE INVENTION

The present invention has the object to eliminate the problems mentioned above. This object is achieved by a device as defined in the claims, wherein also the characteristics of the invention are defined.

According to the invention, a two- or multi-axis universal joint is attached to the tubular drill in combination with substantially unrestricted movability of the lower portion of the tubular drill achieved by that said drill runs through a ring with a radial play, resulting in a reduced wear on the equipment and less damage to obtained material.

Thereby, by a slight lateral wobbling movement the bottom portion of the drill is allowed to counteract the unevenly acting forces emanating from the drill when it hits large stone pieces during its penetration into the ground. Thus, the driving means are relieved, at the same time as the drill to a high extent is enabled to evade or enclose pieces of stone without crushing them.

### BRIEF DESCRIPTION OF THE DRAWINGS

Different embodiments of the invention shall now be disclosed in detail with reference to the attached drawings, wherein:
- FIG. 1: is a schematical, partly sectioned side elevation view illustrating the distribution of loads on a drill assembly provided with a power transmission of conventional design.
- FIG. 2: is a schematical side elevation view of a sampling device according to the invention mounted on a vehicle.
- FIG. 3: is a perspective view of the power transmission according to the invention.
- FIG. 4A: is in part a side elevation view, in part a cross section showing the universal joint and the drill in a condition where the bore crown hits a large stone.
- FIG. 4B: shows the drill shown in fig. 4A when the bore crown, in accordance with the invention, is moved sideways due to a turning of the universal joint, and
- FIG. 5: is a perspective view showing an alternative embodiment having a clamping claw around the lower part of the drill.

### DETAILED DESCRIPTION OF EMBODIMENTS

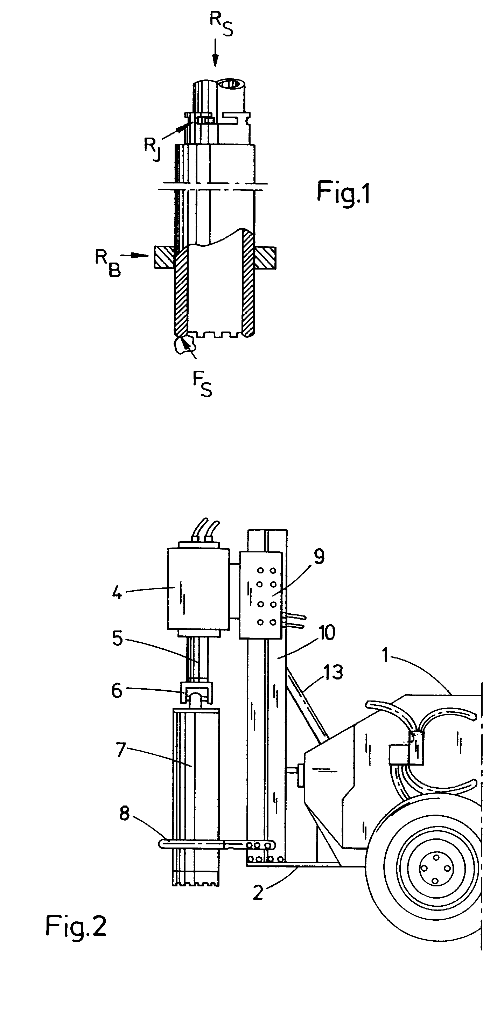

The loads that a drill assembly, provided with a power transmission of conventional design, are subject to when it hits a hard object are illustrated in fig. 1. Thereby, F_{S} refers to the resistance created by the stone piece, while R_{B} is the force of reaction on the plain bearing, R_{J} is the force of reaction on the coupling means and R_{S} is that part of the load that is propagated to the driving motor.

In a drill assembly, being provided with a power transmission according to the present invention, a more advantageous influence is obtained under corresponding circumstances. The following description of an embodiment of the present invention intends to illustrate this.

Fig. 2 shows a drill assembly, according to the invention, that by means of suitable means of attachment 2, 3 is attached to a vehicle 1, whereby said vehicle may be a rail-mounted or cross-country vehicle. The means of attachment may be of such design that the drill assembly is fixed attached to the vehicle or, preferably, attached to hydraulic means in such a manner that the drill assembly can be moved collinear with respect to center axis of the cylindrical drill. For reasons of simplicity, means for collinear movement have not been shown.

The drill assembly includes a motor 4, preferably driven by hydraulics, said motor rotating a driving shaft 5, a two-axis universal joint 6 attached to the driving shaft, a drill 7 attached to the universal joint 6, a ring 8, a slide carriage 9 and a support rail 10.

The motor 4 is attached to the slide carriage 9 which in its turn is attached to and linearly moveable with regard to the support rail 10. Also the ring 8, in which the drill 7 is able to rotate with a free play as well as be longitudinally moved, is attached to the support rail 10.

The slide carriage 9 can be moved along the support rail 10 by means of a motor, preferably hydraulic, (not shown) thereby bringing the drill assembly along. The length and axial movement of the drill 7 is adapted to enable the bringing up and inspection of bore cores of 1 meters height, typically.

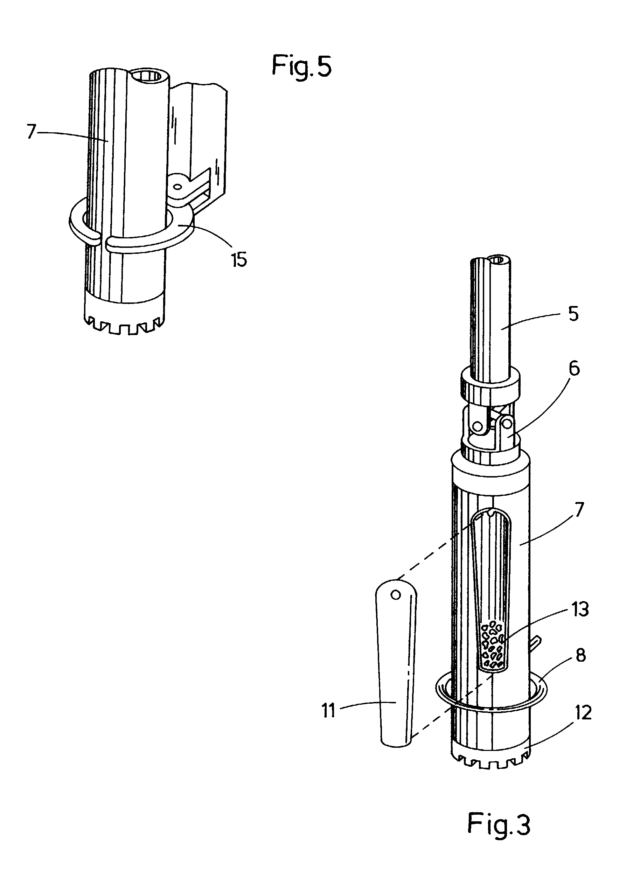

Fig. 3 more clearly illustrate the relation between the driving shaft 5, the to said driving shaft attached universal joint 6, the to said universal joint attached drill 7, which typically has an inner diameter of 2-3 dm, and the ring 8 mounted around the drill 7 with a free play, whereby said free play is such that the inner diameter of the ring is, typically, about 1 dm larger than the outer diameter of the drill.

Further, fig. 3 shows that the drill 7 is provided with a sample hatch 11, which can be loosened by a simple key handle enabling the obtained bore core 13 to be inspected, and an exchangeable bore crown 12.

When sampling, the drill 7 is urged down into the ground by the motor provided in the slide carriage 9, at the same time as the drill 7 is rotated by the motor 4. The material enclosed during the drilling is urged upwards inside the drill 7, formed of a cylindrical tube, and there forms a bore core 13.

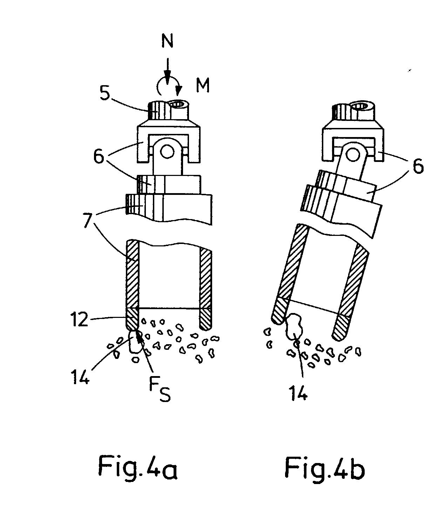

If, during this operation, the bore crown 12 is hit by a large piece of stone 14, as shown in fig. 4A, the thereby emanating force Fs will affect the drill in such a manner that it slants slightly around the universal joint 6, as shown in fig 4B. It should be noted that this resulting action for illustrative purpose is somewhat exaggerated in fig. 4B.

Thereafter, during the continued rotation and downward urging a slight wobbling movement of the drill will enclose the stone or, alternately depending on which side of the bore crown edge the stone were lying, be passed by the drill.

As the drill during the entire sampling operation at numerous occasions will be subject to influences of the above described type, acting in randomly distributed directions, the final deviation from the nominal drilling direction will be of negligible size. If, despite this, larger deviations should occur the above described device for parallel displacement of the drill assembly allows for the operator to follow the drill movements and counteract these with slight parallel displacements of the nominal drilling direction in order to maintain this close to the original one.

The embodiment above shall be seen as an illustrative example only of the present invention. Other embodiments are also possible.

For example, the universal joint can have axes displaced from each other, or the number of axes being more than two. It is also possible to replace the supporting ring with, for example, a clamping claw 15, as shown in fig. 5, if a less pronounced wobbling movement should be desired. Thereby, a presumption for still retaining the above described effect of the invention is that the gripping force of the clamping claw 15 is so limited that a certain wobbling is allowed.

## Claims

1. Device for transmitting a rotational and axial movement to a drill (7), said drill being included in a drill assembly for obtaining ground samples and consisting of a universal joint (6) attached between the drill (7) an a driving shaft (5) and a means for preventing the drill (7) from unlimited lateral movement, said means applied at the lower portion of the drill (7),
characterized in that said universal joint (6) has at least two axes of different orientations in which the drill (7) is supported with regard to the driving shaft (5), and in that said means for limiting the lateral movement is constituted by a ring (8), fixedly attached to the drill assembly and placed around a lower portion of the drill (7) in such a manner that a free play exists between the ring (8) and the drill (7).

2. The device according to claim 1,
characterized in that the universal joint (6) has two axes, crossing each other in a substantially right angle in the same plane and in one point coinciding with the center axis of the drill (7).

3. The device according to claim 1 or 2,
characterized in that said means for limiting the lateral movement is forked and constitutes a clamping claw (15), and in that an urging force applied to the clamping claw (15) is of such a limited strength that the drill (7) allowed to move laterally due to reaction forces created when said drill hits a hard object.
